# FASCICULE DE BREVET EUROPEEN

(11) **EP 2 856 612 B1**
(45) Date de publication et mention de la délivrance du brevet: **14.08.2019**
(21) Numéro de dépôt: 13728453.5
(22) Date de dépôt: 21.05.2013
(51) Int. Cl.: H02K 1/27, H02K 7/04

(54) **ROTOR DE MACHINE ÉLECTRIQUE ET DISPOSITIF DE MAINTIEN D'AIMANTS PERMANENTS ASSOCIÉ**
ROTOR EINER ELEKTRISCHEN MASCHINE UND ZUGEHÖRIGE VORRICHTUNG ZUM HALTEN EINES DAUERMAGNETEN
ELECTRIC MACHINE ROTOR AND ASSOCIATED PERMANENT MAGNET HOLDING DEVICE

(30) Priorité: 24.05.2012 FR 1254733
(43) Date de publication de la demande: 08.04.2015
(73) Titulaire: Valeo Equipements Electriques Moteur, 94046 Créteil Cedex (FR)
(72) Inventeur: EL BARAKA, Khadija, 77600 Bussy St Georges (FR); JUGOVIC, Svetislav, 91260 Juvisy-sur-Orge (FR); WOLFF, Pawel, 43-300 Bielsko-Biala (PL); KUBALA, Bartosz, 43-300 Beilsko-Biala (PL); MARGUERITTE, David, 62170 Wailly Beaucamp (FR); CAMBRONNE, Olivier, 62780 Cucq (FR)
(74) Mandataire: Duprez, Richard
(86) Numéro de dépôt international: PCT/FR2013/051102
(87) Numéro de publication internationale: WO 2013/175117

(56) Documents cités:
- WO-A1-2012/007920
- DE-A1-102008 018 724
- DE-A1-102010 039 334
- FR-A1- 2 963 175
- JP-A- 2004 357 418

## Description

### DOMAINE TECHNIQUE DE L'INVENTION

L'invention concerne un rotor pour machine électrique ainsi que le dispositif de maintien d'aimants permanents associé.

L'invention trouve une application particulièrement avantageuse, mais non exclusive, avec les alternateurs ou générateurs de courant, tels ceux appartenant à un prolongateur d'autonomie d'un véhicule électrique-appelé «Range-Extender » en Anglais- ou avec les compresseurs utilisés pour la compression de fluide réfrigérant de climatiseur de véhicule automobile.

### ETAT DE LA TECHNIQUE

On connaît des machines électriques comportant un stator et un rotor à aimants permanents solidaire d'un arbre. Le rotor pourra être solidaire d'un arbre menant et/ou menée et pourra appartenir à une machine électrique tournante sous la forme d'un alternateur ou générateur de courant comme décrit dans le document EP 0 803 962 ou d'un moteur électrique comme décrit dans le document EP 0 831 580. L'arbre pourra assurer la mise en mouvement d'un compresseur à spirale, également connu sous le nom de "compresseur scroll". Un tel système comporte deux spirales intercalées comme des palettes pour pomper et comprimer le fluide réfrigérant. En général, une des spires est fixe, alors que l'autre se déplace excentriquement sans tourner, de sorte à pomper puis emprisonner et enfin comprimer des poches de fluide entre les spires. Un tel système est par exemple décrit dans le document EP1865200. Dans tous les cas la machine électrique comporte un boîtier portant le stator. Ce boîtier est configuré pour porter à rotation l'arbre par exemple par l'intermédiaire de roulements, tel que des roulements à billes et/ou à aiguilles.

Le rotor comprend un corps réalisé en tôle feuilletée, qui comporte des logements à l'intérieur d'au moins certains d'entre eux est positionné au moins un aimant permanent comme visible par exemple dans les figures 1 et 2 du document EP 0803 962.

Lorsque les tolérances utilisées dans la réalisation du rotor sont grandes afin de réduire les coûts de fabrication, il est possible que les aimants soient mal plaqués à l'intérieur des logements du rotor sachant qu'il sont soumis à l'action de la force centrifuge.

Le document DE 102008018724 décrit un dispositif de maintien pour aimant et le document WO 2012/007920 décrit un rotor comprenant des poids d'équilibrage.

### OBJET DE L'INVENTION

L'invention a pour but de remédier à cet inconvénient.

A cet effet, on utilise des dispositifs de maintien positionnés à l'intérieur des logements assurant un maintien des aimants à l'intérieur de leur logement quelle que soit la vitesse de rotation du rotor.

Plus précisément, l'invention concerne un rotor à aimants permanents selon la revendication 1.

Selon une réalisation les logements sont fermés en étant formés dans le corps du rotor de sorte que l'extrémité interne d'un logement est fermée.

Selon une réalisation certains au moins des logements du corps du rotor sont borgnes vers l'intérieur en direction de l'axe du rotor et l'extrémité interne de ces logements est fermée par un moyeu central, que comporte le rotor.

Selon une réalisation certains des logements contiennent une pluralité d'aimants empilés suivant une direction axiale avec présence d'au moins un élément amagnétique globalement de même forme que les aimants pour former suivant une direction axiale une colonne d'éléments empilés les uns sur les autres.

Selon une réalisation, chaque première partie comporte une alternance de portions arrondies et de portions plates assurant la liaison entre les portions arrondies, le nombre de portions arrondies étant égal au nombre d'éléments de la colonne d'éléments à l'intérieur d'un logement, les portions arrondies dont le côté convexe est tourné vers les éléments de la colonne appliquent par déformation un effort radial sur chaque élément de la colonne d'éléments du logement de l'intérieur vers l'extérieur du rotor..

Selon une réalisation, les dispositifs de maintien comportent chacun une deuxième partie positionnée radialement contre un fond du logement et une face d'extrémité de la colonne d'aimants et/ou d'au moins un élément amagnétique, cette deuxième partie présentant une forme telle qu'elle exerce par déformation un effort axial sur de la colonne d'aimants et/ou d'au moins un élément amagnétique,

Selon une réalisation, la deuxième partie est formée par une portion arrondie et deux portions plates situées de part et d'autre de la portion arrondie, les portions plates étant en appui contre le fond du logement, la portion arrondie dont le côté convexe est tourné vers l'élément d'extrémité de la colonne d'éléments applique par déformation un effort axial sur les aimants permanents.

Selon une réalisation, les dispositifs de maintien comportent chacun une troisième partie de forme plate et une zone de pliage située entre la première et la troisième parties permettant à la troisième partie d'être rabattue pour assurer la fermeture d'une extrémité du logement.

Selon une réalisation, le rotor comporte en outre des flasques de maintien plaqués de part et d'autre de faces radiales d'extrémités du corps du rotor, ces flasques de maintien comportant un ensemble de dents assurant l'équilibrage du rotor.

Selon une réalisation, les flasques de maintien forment les fonds des logements, ces flasques de maintien comportant des plaquettes positionnés en regard des logements pour être plaquées contre la deuxième et la troisième parties des dispositifs de maintien.

Selon une réalisation, les flasques de maintien comportent des plots destinés à coopérer avec des évidements ménagés dans le corps du rotor pour assurer un centrage des flasques par rapport au corps du rotor.

L'invention concerne en outre un dispositif de maintien utilisé avec un rotor selon l'invention comportant un paquet de tôles formant le corps du rotor ayant un axe, et des logements situés dans le corps du rotor recevant des aimants permanents, certains au moins des logements contenant une pluralité d'aimants empilés suivant une direction axiale et formant une colonne d'aimants, caractérisé en ce qu'il comporte une première partie destinée à être positionnée axialement entre une extrémité interne d'un logement et une face des aimants de la colonne d'aimants tournée du côté de l'axe du rotor, cette première partie comportant une alternance de portions arrondies et de portions plates assurant la liaison entre les portions arrondies, les portions arrondies dont le côté convexe est tourné vers les aimants permanents appliquent par déformation un effort radial sur chaque aimant permanent du logement de l'intérieur vers l'extérieur du rotor.

Selon une réalisation, le dispositif de maintien comporte une deuxième partie formée par une portion arrondie et deux portions plates situées de part et d'autre de la portion arrondie, les portions plates étant destinées à venir en appui contre le fond d'un logement, la portion arrondie dont le côté convexe est tourné vers l'aimant étant destinée à appliquer par déformation un effort axial sur les aimants du logement.

Selon une réalisation, le dispositif de maintien comporte une troisième partie de forme plate et une zone de pliage située entre la première et la troisième parties permettant à la troisième partie d'être rabattue pour assurer la fermeture d'une extrémité d'un logement.

Selon une caractéristique les dispositifs de maintien comportent une première et une deuxième partie élastiquement déformable.

L'invention sera mieux comprise à la lecture de la description qui suit et à l'examen des figures qui l'accompagnent. Ces figures ne sont données qu'à titre illustratif mais nullement limitatif de l'invention.

### BREVE DESCRIPTION DES FIGURES

La Figure 1 montre une vue en perspective du dispositif de maintien selon l'invention ;
Les Figures 2a-2e montre des vues en perspectives du rotor selon l'invention lors des différentes étapes de montage de ce rotor;
Les Figures 3a-3b montrent des vues de face et de dos des flasques de maintien utilisés avec le rotor selon l'invention;
La Figure 4 montre une vue en demi-coupe du rotor assemblé selon l'invention avec modification des tirants.

Les éléments identiques, similaires ou analogues conservent la même référence d'une figure à l'autre.

### DESCRIPTION D'EXEMPLES DE REALISATION DE L'INVENTION

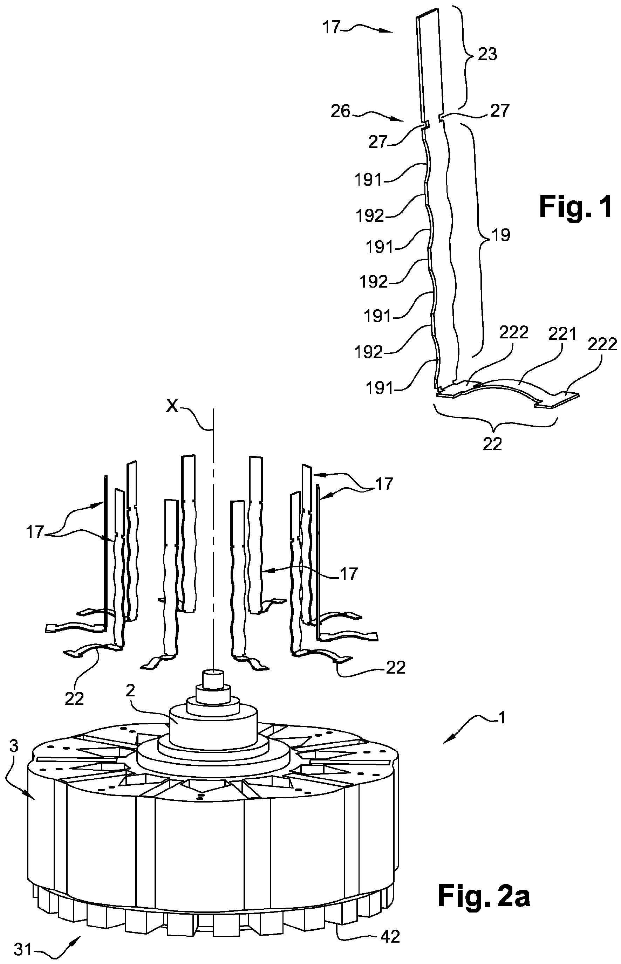

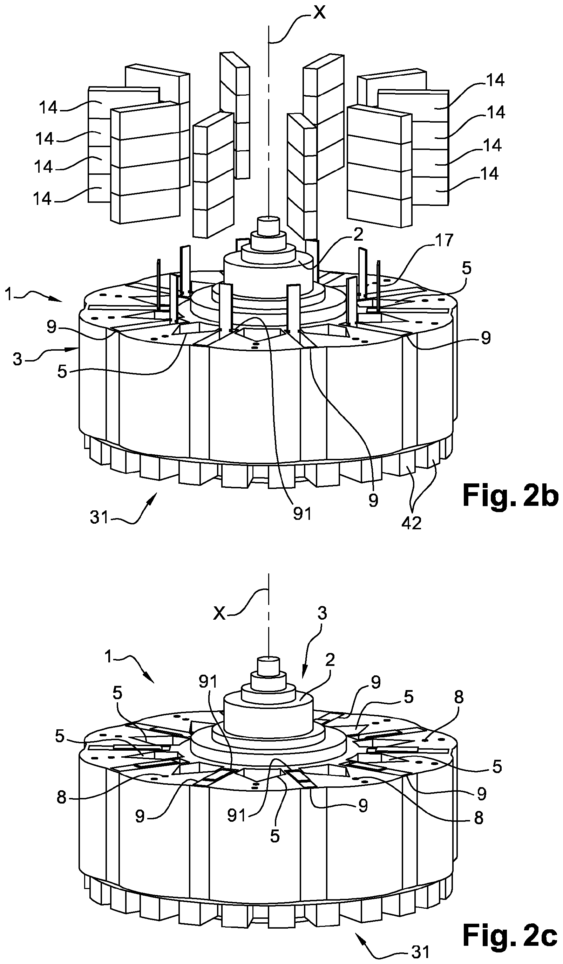

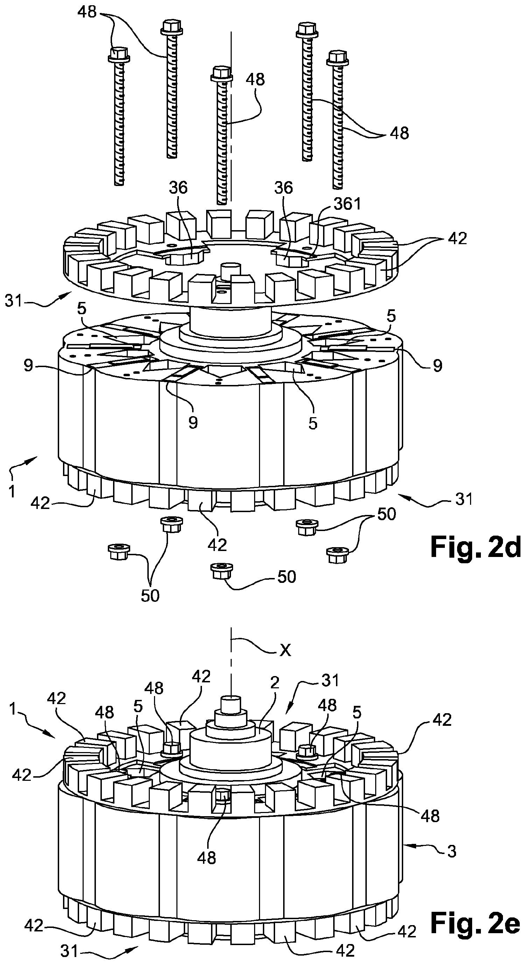

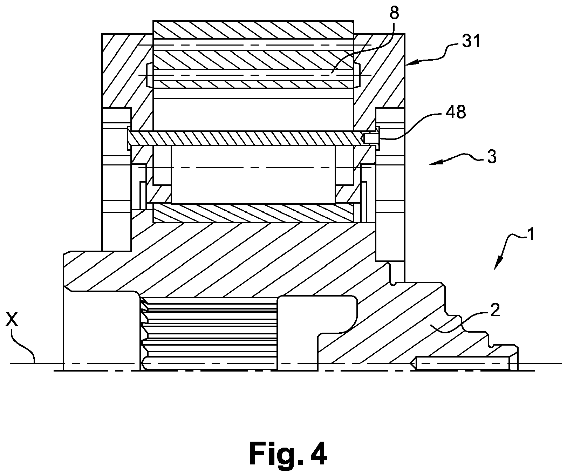

Les Figures 2 et 4 montrent un rotor 1 selon l'invention d'axe X ayant un corps 3 fixé à un moyeu central 2 cannelé à sa périphérie interne pour fixation en rotation sur un arbre (Figure 4). Le corps 3 comporte des évidements 5 ainsi que des logements 9 destinés à recevoir des aimants permanents 14 maintenus radialement et axialement à l'aide de dispositifs de maintien 17. Des flasques de maintien 31 plaqués de part et d'autre du corps 3 du rotor assurent l'équilibrage de l'ensemble. Plus précisément, le rotor 1 est formé par un empilement de tôles s'étendant dans un plan radial perpendiculaire à l'axe X. Le paquet de tôles forme le corps 3 du rotor 1 et est en matière ferromagnétique. Dans exemple de réalisation, le corps 3 présente un diamètre de l'ordre de 160 millimètres et une hauteur axiale de l'ordre de 50 millimètres. Bien entendu cela dépend des applications, la hauteur ou longueur axiale du corps 3 pourra être supérieure à 50 mm.

Comme visible sur la Figure 2c, les évidements 5 ménagés dans le corps 3 présentent, en vue de dessus, une forme issue de la combinaison d'une forme en triangle et d'une forme en trapèze. Le triangle présente un côté en commun avec le grand côté du trapèze. Les tôles du corps 3 sont maintenues au moyen de rivets 8 traversant axialement le rotor 1 de part en part (cf. Figure 2c). Les évidements 5 permettent de bien canaliser le flux magnétique. Dans un autre mode de réalisation le corps 3 est dépourvu d'évidements comme visible dans le document EP 0 803 962.

**Le corps 3** comporte également des logements 9 de forme sensiblement parallélépipédique destinés à recevoir des aimants permanents 14. Ces logements 9 positionnés entre les évidements 5 présentent une direction longitudinale d'extension parallèle à l'axe X et une direction d'extension s'étendant sensiblement radialement par rapport à l'axe X. Les logements 9 sont espacés régulièrement sur la circonférence du rotor 1. L'une des faces radiale (ou face latérale) de l'aimant forme un pôle Nord et l'autre face radiale de l'aimant un pôle Sud comme dans le document EP 0 803 962. Les logements 9, formés dans le corps 3, sont ici fermés et de section globalement rectangulaire. L'extrémité interne 91 d'un logement, qui est la plus proche de l'axe X du rotor 1 est donc fermée et constitue la face axiale interne 91 du logement.

Plus précisément, les logements 9 sont destinés dans ce mode de réalisation à recevoir chacun des éléments sous la forme uniquement d'une pluralité d'aimants permanents 14 superposés les uns sur les autres suivant une de leur face longitudinale pour obtenir une puissance maximale de la machine. Les aimants 14 ainsi superposés forment une colonne d'éléments magnétiques ayant une forme complémentaire de celle des logements 9. Les aimants 14 sont donc empilés les uns sur les autres suivant une direction axiale pour former une colonne d'éléments de forme complémentaire à celle des logements 9. En l'occurrence, chaque colonne d'aimants 14 est composée de quatre aimants 14. Le rotor 1 comporte dix colonnes d'aimants 14 insérés dans dix logements 9 de forme complémentaires. Le rotor 1 comporte également dix évidements 5. Les aimants peuvent être en terre rare par exemple à base de Samarium-Cobalt (SmCo) ou à base de Néodymium- Fer- Bore (NdFeB) ayant une haute coercivité et un taux élevé de rémanence ainsi qu'une bonne tenue en température. Ils peuvent également être en Ferrite. L'utilisation d'aimants en terre rare est possible grâce au dispositif de maintien 17 décrit ci-après qui ménage les aimants 14 et au fait que l'on monte plusieurs aimants dans un même logement. Bien entendu le nombre d'aimants dépend des applications et notamment de la longueur du corps 3. Ce nombre pourra donc être supérieur à 4.

En variante on peut loger dans des logements des aimants en terre rare et dans d'autres logements des ferrites, dont le nombre pourra être égal ou inférieur au nombre d'aimants en terre rare. Ainsi on peut utiliser des aimants en terre rare coûteux pour s'approcher au mieux par exemple d'une puissance électrique souhaitée de la machine et compléter cela par des aimants en Ferrite moins coûteux. L'invention permet de faire appel à des aimants permanents de nuance différente.

En outre dans certains des logements on peut remplacer au moins l'un des aimants par un élément amagnétique, par exemple en Aluminium, de même forme pour obtenir la puissance désirée de la machine électrique. Il est ainsi formé, dans la direction axiale, une colonne d'éléments empilés les uns sur les autres et de forme complémentaire à celle des logements.

Ainsi tous les logements peuvent donc contenir une pluralité d'aimants empilés selon la direction axiale avec éventuellement présence d'au moins un élément amagnétique. En variante au moins deux logements diamétralement opposés sont vides. Grâce au fait que la colonne d'éléments comporte au moins une pluralité d'aimants empilés on peut régler aisément la puissance de la machine électrique tournante tout en conservant le même rotor. Suivant les applications le nombre d'éléments pourra donc être au moins de 4 avec au moins deux ou trois aimants permanents. Il pourra être supérieur à 4 avec au moins trois aimants.

Pour assurer un bon maintien des aimants 14 à l'intérieur de leur logement 9, le rotor 1 comporte des dispositifs de maintien 17 formés à partir d'une bande de métal allongée, dont la largeur dépend de celle du logement 9 dans lequel cette bande pénètre. Ainsi ces dispositifs de maintien 17 montrés à la Figure 1 comportent chacun une première partie 19 positionnée axialement entre une face axiale interne 91 (l'extrémité interne) du logement 9 et une face interne des aimants 14 tournée du côté de l'axe X du rotor 1 (cf. Figure 2c). Cette première partie 19 présente une forme telle qu'elle exerce par déformation, lorsqu'elle est compressée entre les aimants 14 et la face 91, un effort radial sur chaque aimant 14 du logement 9 de l'intérieur vers l'extérieur du rotor 1.

Dans un exemple de réalisation, la première partie 19 est formée par une alternance de portions arrondies 191 et de portions plates 192. Les portions plates 192 assurent la liaison entre les portions arrondies 191. Les portions plates 192 sont destinées à être plaquées contre la face interne 91 du logement 9 la plus proche de l'axe X du rotor. Les portions arrondies 191 comportent une face convexe en appui contre une face interne de chaque aimant 14 du logement 9 et une face concave tournée vers la face 91 du logement 9.

Les dispositifs de maintien 17 comportent également une deuxième partie 22 qui s'étend sensiblement perpendiculairement à la première partie 19. La deuxième partie 22 est positionnée radialement entre une face d'un flasque de maintien 31 et une face longitudinale d'un aimant d'extrémité 14. Cette deuxième partie 22 présente une forme telle qu'elle exerce par déformation, lorsqu'elle est compressée entre l'aimant d'extrémité 14 et un des flasques 31 de maintien, un effort axial sur les aimants 14.

Dans un exemple de réalisation, la deuxième partie 22 est formée par une portion arrondie 221 et deux portions plates 222 situées de part et d'autre de la portion arrondie 221. Les portions plates 222 sont destinées à venir en appui contre le flasque 31. La portion arrondie 221 présente un côté convexe en appui contre l'aimant d'extrémité 14 et une partie concave tournée vers le flasque 31.

Le dispositif de maintien 17 comporte également une troisième partie 23 de forme plate située dans le prolongement de la première partie 19. Le dispositif de maintien 17 comporte une zone de pliage 26 entre la première 19 et la troisième 23 partie formée par la réalisation de deux encoches 27 sur les bords du dispositif de maintien 17. Alternativement, la zone de pliage 26 est obtenue par un amincissement de matière dans son épaisseur. Cette zone de pliage 26 permet à la troisième partie 23 d'assurer la fermeture d'une extrémité du logement 9 à l'intérieur duquel est positionné le dispositif de maintien 17. Une zone de pliage semblable aura pu être réalisée entre la première 19 et la deuxième partie 22 pour permettre l'orientation suivant une direction perpendiculaire de la deuxième partie 22 par rapport à la première partie 19.

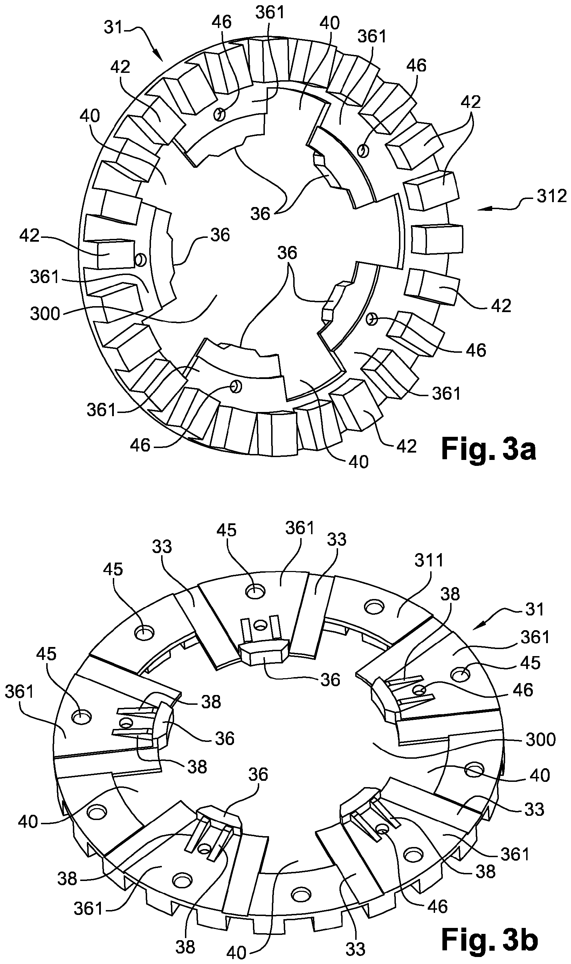

Les flasques de maintien 31 sont fixés de part et d'autre du corps 3 sur des faces radiales d'extrémité du rotor 1. Ils forment les fonds d'extrémité des logements 9. Comme montré sur les Figures 3, ces flasques de maintien 31 comportent une ouverture centrale 300 autorisant le passage de l'arbre du rotor. Ces flasques 31 assurent un équilibrage du rotor tout en permettant un bon maintien des aimants 14 à l'intérieur de leur logement 9. Ces flasques 31 sont réalisés dans un matériau non magnétique présentant une grande rigidité mécanique. Les flasques 31 pourront être en Aluminium.

A cet effet, chaque flasque 31 de forme annulaire radiale comporte une face 311 radiale interne, dite face d'appui, destinée à venir en appui contre une face d'extrémité radiale du corps 3 du rotor. Les flasques 31 comportent des plaquettes 33 de maintien des aimants 14 à l'intérieur de leur logement 9. Ces plaquettes 33 sont positionnées à la périphérie externe de chaque flasque 31 et s'étendent radialement vers l'intérieur des flasques 31 suivant leur longueur. Ces plaquettes 33 sont espacées régulièrement de manière angulaire sur la circonférence du flasque 31.

Ces plaquettes 33 sont destinées à être positionnées en regard des extrémités de chaque logement 9 pour être plaquées, suivant le côté du corps 3 où se trouve le flasque 31, contre la deuxième 22 ou la troisième 23 partie du dispositif de maintien 17. En l'occurrence, les plaquettes 33 sont situées de part et d'autre de supports 361 portant des plots 36 de centrage. Les ensembles constitués chacun d'un support 361 de plots et de deux plaquettes 33 de part et d'autre du support 361 sont séparées par des échancrures 40. Les plaquettes 33 sont ici au nombre de dix.

Les plots 36 portés par des supports 361 de plots sont destinés à s'insérer à l'intérieur des évidements 5 pour permettre le centrage des flasques 31 sur le corps 3 du rotor. Ces plots 36 sont positionnés circonférentiellement autour de la périphérie interne du flasque 31. Dans un exemple de réalisation, ces plots 36 présentent en coupe une forme trapézoïdale complémentaire de la forme de l'extrémité des évidements 5. Ces plots 36 sont de préférence rigidifiés au moyen de deux rampes 38 inclinées s'étendant radialement sur le support 361 depuis la face du plot tournée du côté opposé de l'ouverture 300 du flasque vers l'extérieur du flasque 31. Le nombre de plots 36 est inférieur au nombre d'évidements 5. Les plots 31 occupent par exemple un évidement 5 sur deux. En l'occurrence, ces plots 36 sont au nombre de cinq.

La face **312 externe** des flasques 31, opposée à la face d'appui 311, porte des dents 42 assurant l'équilibrage du rotor 1. Ces dents 42 sont positionnées à la périphérie externe des flasques 31. Dans un exemple de réalisation, ces dents 42 de forme parallélépipédique présentent une direction longitudinale orientée radialement par rapport à l'axe X du rotor 1.

Ces dents 42 pourront être usinées par un outil adapté réalisant un retrait précis de matière pour assurer l'équilibrage du rotor. Le nombre de dents 42, la taille des dents 42 et leur positionnement sont des paramètres qui dépendent des caractéristiques d'équilibrage du rotor 1.

Les flasques 31 comportent également des trous borgnes 45 arrondis destinés à être positionnés en regard des extrémités des rivets 8 du rotor 1 de sorte que la face d'appui 311 des flasques 31 n'interfère pas avec les rivets 8, qui traversent le rotor 1 via des ouvertures correspondantes ménagées dans les tôles du corps 3 pour formation d'un ensemble manipulable et transportable.

Les flasques 31 comportent également des ouvertures traversantes 46 pour le passage de tirants 48, ici à écrous 50, assurant l'assemblage des flasques 31 avec le rotor 1. Les ouvertures 46 sont positionnées de telle manière que les tirants 48 traversent le rotor 1 via des ouvertures correspondantes ménagées dans les tôles du corps 3 du rotor 1. De préférence, les ouvertures 46 sont positionnées entre les deux rampes 38 d'un plot 36. Les rivets 8 sont implantés sur une circonférence de diamètre moyen supérieur à celui des tirants 48. Les rivets 8 et les tirants 48 pourront être en matériau amagnétique.

Le diamètre externe des flasques 31 peut être inférieur ou égal au diamètre du corps 3 du rotor 1; tandis que le diamètre interne des flasques 31 est adapté pour que les plots 36 de centrage puissent coopérer convenablement avec les évidements 5 du corps 3.

On décrit ci-après le montage du rotor 1 selon l'invention.

Dans une première étape montrée à la Figure 2a, un des flasques 31 est plaqué contre une des faces radiales d'extrémité du corps 3 du rotor de manière à fermer une des extrémités des logements 9. Afin d'être correctement centré par rapport au corps 3 du rotor, le flasque 31 est positionné de sorte que les plots 36 de centrage coopèrent avec les évidements 5 du corps 3 du rotor.

Ensuite, comme montré sur la Figure 2b, les dispositifs de maintien 17 sont ensuite positionnés à l'intérieur des logements 9. Les dispositifs de maintien 17 sont positionnés de sorte que, pour chacun, la première partie 19 se trouve plaquée contre la face axiale interne 91 du logement 9 la plus proche de l'axe X du rotor 1, la deuxième partie 22 s'étend suivant le fond du logement formé par le flasque 31, et la troisième partie 23 qui se trouve dans le prolongement de la première partie 19 est située à l'extérieur du logement 9. Les portions arrondies 191 s'étendent de telle manière que la distance radiale entre l'extrémité des portions arrondies 191 et la face du logement 9 en regard des portions arrondies 191 est légèrement inférieure à la dimension radiale de l'aimant 14 correspondante.

Dans une étape montrée sur les Figures 2b et 2c, les aimants 14 sont enfilés axialement en force à l'intérieur du logement 9. Chaque nouveau aimant 14 inséré dans la colonne a tendance à repousser l'aimant 14 précédemment inséré vers le fond du logement 9 en le faisant franchir les portions arrondies 191. La première partie 19 du dispositif de maintien applique, du fait de la déformation de chaque portion arrondie 191, un effort radial de maintien sur chaque aimant 14 des logements 9.

Une fois que l'ensemble des aimants 14 a été inséré dans les logements 9, la troisième partie 23 des dispositifs de maintien 17 est repliée en direction des logements 9 suivant la zone de pliage 26 de manière à fermer l'extrémité du logement 9 par laquelle ont été insérés les aimants 14, comme bien visible à la Figure 2c.

Comme montré sur la Figure 2d, le deuxième flasque 31 est alors plaqué contre le corps 3 du rotor via sa face d'appui 311, de sorte que les troisièmes parties 23 sont plaquées contre les plaquettes 33 correspondantes. Afin d'être correctement centré par rapport au corps 3 du rotor, le deuxième flasque 31 est positionné de sorte que les plots 36 de centrage des flasques 31 coopèrent avec les évidements 5 du corps 3 correspondants.

Les tirants 48 sont positionnés à l'intérieur des ouvertures 46 des flasques 31 de manière à traverser axialement le corps du rotor de part en part via les évidements 5. Le maintien de l'ensemble du rotor 1 est assuré par le vissage d'écrous 50 à l'extrémité filetée des tirants 48. En variante les tirants 48 sont dépourvus de partie filetée à leur extrémité opposée à leur tête comme visible à la figure 4. Ils comportent une tête en appui sur la face externe 312 de l'un des flasques 31 tournée à l'opposé du corps du rotor 1, une partie lisse traversant le corps 3 du rotor via les ouvertures 46 et une extrémité configurée via un trou borgne en forme de rivet dont la tête est écrasée au contact de la face externe 312 de l'autre flasque pour réduction de l'encombrement axiale du tirant. En variante le tirant comporte deux extrémités filetées pour le vissage de deux écrous 50.

La distance entre l'extrémité de la portion arrondie 221 du dispositif de maintien 17 et la face du deuxième flasque 31 opposé étant inférieure à la hauteur de la colonne d'aimants 14, le plaquage du deuxième flasque 31 contre le corps 3 du rotor 1 a pour effet de déformer la portion arrondie 221 qui exerce alors par réaction un effort axial sur la colonne d'aimants 14 correspondante. On obtient ainsi un bon maintien axial des aimants 14 à l'intérieur des logements 9.

Ainsi qu'il ressort de la description et des dessins le dispositif de maintien 17 est une pièce élastique en forme de bande de matière, qui présente une première partie 19 et une deuxième partie 22 élastiquement déformable pour exercer respectivement un effort radial et axial sur les aimants permanents. La première partie 19 à action radiale permet de ménager les aimants 14 car ceux-ci sont moins sensibles aux chocs et aux vibrations du fait de cette première partie 19. La deuxième partie 22 à action axiale permet également de ménager les aimants 14 et de rendre ceux-ci encore moins sensibles aux chocs et aux vibrations. Les aimants ont une bonne tenue à la force centrifuge grâce aux dispositifs 17. En outre les tolérances de fabrication des logements 9 et des aimants 14 peuvent être larges du fait que les première 19 et deuxième 22 partie du dispositif 17 rattrapent les jeux. De plus on notera que certains au moins des logements 9 contiennent une pluralité d'élément magnétiques - les aimants permanents 14- et/ou d'au moins un élément amagnétique de même forme empilés les uns sur les autres pour former une colonne, la deuxième partie 22 du dispositif s'appuyant sur un élément magnétique ou amagnétique. Le nombre d'aimants 14 d'une colonne dépend des applications.

Grâce à l'invention on obtient dans au moins certains des logements un agencement avec une pluralité d'aimants permanents ce qui permet de diminuer les pertes de fer par rapport à une solution à un aimant unique et donc d'augmenter les performances de la machine électrique. En outre les aimants sont moins épais qu'un unique aimant et sont donc chacun moins sensibles à la force centrifuge. Ils risquent donc de moins casser ou d'être endommagés qu'un unique aimant. De plus les aimants empilés risquent de moins casser lors de leur montage dans leur logement associé. Les logements peuvent être de grande longueur axiale.

On appréciera que la présence du dispositif de maintien des aimants permet d'augmenter les tolérances de fabrication tout en ayant une bonne tenue radiale des aimants sans mouvement de ceux-ci

Bien entendu, l'homme du métier pourra apporter des modifications aux différentes formes du corps 3 du rotor 1, des dispositifs de maintien 17 et des flasques 31 de maintien décrites dans les figures sans sortir du cadre de l'invention. En particulier, les dispositifs de maintien 17 pourront comporter uniquement la première partie 19, ou uniquement la première 19 et la deuxième 22 parties, ou uniquement la première 19 et la troisième 23 parties.

Certains dispositifs de maintien 17 pourront être montés dans des logements 9, avantageusement diamétralement opposés, remplis d'éléments amagnétiques superposés empilés les uns sur les autres dans la direction axiale pour former une colonne d'éléments amagnétiques, tel que des éléments en Aluminium, empilés les uns sur les autres et de même forme que celle des logements 9 de sorte que le nombre de portions arrondies 191 étant égal au nombre d'éléments amagnétiques. Dans ce cas la portion arrondie 221 de la deuxième partie prend appui sur un élément amagnétique.

Dans le cas précité ou on remplace un aimant 14 par un élément amagnétique, cette portion arrondie, selon la position de l'élément amagnétique dans la colonne, pourra prendre appui sur un élément amagnétique ou sur un aimant constituant l'élément d'extrémité (et donc la face d'extrémité) de la colonne d'éléments logée dans le logement 9 concerné. Le nombre de portions arrondies 191 étant égal au nombre de ces éléments. Bien entendu toutes les combinaisons sont possibles. Ainsi certains des logements, avantageusement diamétralement opposés deux à deux, équipés de dispositifs 17 pourront contenir des éléments sous la forme uniquement d'une pluralité d'aimants, d'autres de ces logements, avantageusement diamétralement opposés deux à deux, équipés de dispositifs 17 pourront contenir une pluralité d'aimants et au moins un élément amagnétique de même forme, ou en variante uniquement des éléments amagnétiques. En variante ces autres logements pourront être vides.

Les dents 42 des flasques 31 pourront être en variantes dotées de trous borgnes pour montage de masses d'équilibrage aux endroits adéquates comme décrit dans le document DE 2 346 345 auquel on se reportera.

Les flasques 31 pourront être en variante en matière plastique avantageusement renforces par des fibres.

Certains au moins des logements 9 pourront être en variante borgnes en étant ouverts vers l'intérieur comme dans le document EP 0 803 962. Dans ce cas l'extrémité interne de ces logements 9, avantageusement diamétralement opposés, est formée par le moyeu central 2 qui forme la face interne pour le dispositif de maintien 17.

Ce dispositif de maintien 17 en forme de bande de matière est dans un mode de réalisation en acier à ressort. Dans un autre mode de réalisation le dispositif 17 est en matière plastique avantageusement ou en tout autre matière, par exemple métallique. Ces dispositifs 17 pourront être dotés d'un revêtement pour contact avec les des aimants et /ou les éléments amagnétiques

Dans les figures le moyeu 2 est cannelé intérieurement pour sa liaison en rotation avec l'arbre de sortie d'un moteur thermique, tel qu'un moteur thermique à deux ou trois cylindres, et le rotor appartient à un alternateur ou à un générateur de courant sans balai. L'ensemble moteur thermique-alternateur constituant un groupe électrogène dit prolongateur d'autonomie, appelé en Anglais « Range Extender », pour recharger les batteries et/ou alimenter électriquement le moteur électrique d'un véhicule électrique afin d'augmenter son autonomie kilométrique. Le boîtier portant le stator de l'alternateur pourra être refroidit par la circulation d'un liquide de refroidissement.

La présence du moyeu 2 n'est pas impérative. Ainsi dans un mode de réalisation le paquet de tôle du rotor pourra être emmanché directement sur l'arbre. Cet arbre pourra être l'arbre d'un alternateur ou d'un alternateur réversible, appelé alterno-démarreur, relié au moteur thermique d'un véhicule automobile par un dispositif de transmission de mouvement comportant par exemple au moins une courroie comme décrit par exemple dans le document WO 2007/003835, l'alternateur ou l'alterno-démarreur étant alors sans balais. L'arbre pourra donc être solidaire d'une poulie et le refroidissement de la machine électrique pourra être réalisé à l'aide d'au moins un ventilateur solidaire du rotor.

Bien entendu la machine électrique tournante pourra être un alternateur du type de celui du document EP 0 803 962 ou un moteur électrique comme décrit dans le document EP 0 831 580 ou un compresseur utilisé pour la compression de fluide réfrigérant de climatiseur de véhicule automobile comme décrit dans le document EP 1865200, avec en variante entraînement direct des spirales.

Le stator de la machine électrique pourra comporter un bobinage polyphasé par exemple du type triphasé, pentaphasé ou hexaphasé. La rotation du rotor pourra être réalisé via des capteurs de la position du rotor et un onduleur à éléments semi conducteur de puissance, tel que des transistors du type MOSFET, comme décrit dans le document EP 0 831 580. Grâce à cet agencement l'alternateur du prolongateur d'autonomie pourra également fonctionner de manière réversible pour démarrer le moteur thermique.

## Revendications

1. Rotor (1) à aimants permanents (14) comportant :
- un paquet de tôles formant le corps (3) du rotor ayant un axe (X), et
- des logements (9) espacés régulièrement sur la circonférence du rotor (1) et situés dans le corps (3) du rotor (1), dont certains au moins reçoivent au moins un élément sous la forme d'un aimant permanent (14),
- au moins certains des logements (9) contiennent des éléments comportant au moins une pluralité d'aimants (14) empilés suivant une direction axiale et formant une colonne d'aimants,
**caractérisé**
- **en ce que** le rotor (1) comporte en outre des dispositifs de maintien (17) étant des pièces élastiques en forme de bande de matière et comportant chacun une première partie (19) positionnée axialement entre une extrémité interne (91) d'un logement (9) et une face des aimants (14) de la colonne d'aimants (14) tournée du côté de l'axe (X) du rotor, cette première partie (19) ayant une forme telle qu'elle exerce par déformation un effort radial sur chaque aimant (14) de la colonne d'aimants de l'intérieur vers l'extérieur du rotor (1), et une deuxième partie (22) élastiquement déformable pour exercer un effort axial sur les aimants permanents (14), la deuxième partie (22) étant positionnée radialement contre un fond du logement (9) et une face d'extrémité de la colonne d'éléments à l'intérieur du logement (9), cette deuxième partie (22) présentant une forme telle qu'elle exerce par déformation un effort axial sur les aimants permanents (14).

2. Rotor selon la revendication 1, **caractérisé en ce que** les logements (9) sont fermés en étant formés dans le corps (3) du rotor (1) de sorte que l'extrémité interne (91) des logements (9) est fermée.

3. Rotor selon la revendication 1, **caractérisé en ce qu'**au moins certains des logements (9) sont borgnes vers l'intérieur en direction de l'axe (X) du rotor en étant formés dans le corps (3) du rotor (1) et **en ce que** l'extrémité interne (91) de ces logements est fermée par un moyeu central (2) que comporte le rotor (2).

4. Rotor selon l'une des revendications 1 à 3, **caractérisé en ce que** certains au moins des logements (9) contiennent uniquement une pluralité d'aimants permanents (14) empilés les uns sur les autres suivant une direction axiale pour former une colonne d'éléments.

5. Rotor selon l'une des revendications 1 à 3, **caractérisé en ce que** certains au moins des logements (9) contiennent une pluralité d'aimants permanents (14) empilés suivant une direction axiale avec présence d'au moins un élément amagnétique de même forme que les aimants pour former suivant une direction axiale une pluralité d'élément empilés les uns sur les autres.

6. Rotor selon la revendication 4 ou 5, **caractérisé en ce que** chaque première partie (19) comporte une alternance de portions arrondies (191) et de portions plates (192) assurant la liaison entre les portions arrondies (191), le nombre de portions arrondies (191) étant égal au nombre d'éléments de la colonne d'éléments à l'intérieur d'un logement (9), les portions arrondies (191) dont le côté convexe est tourné vers les éléments de la colonne appliquent par déformation un effort radial sur chaque élément de la colonne d'éléments du logement (9) de l'intérieur vers l'extérieur du rotor (1).

7. Rotor selon l'une des revendications 1 à 6, **caractérisé en ce que** la deuxième partie (22) est formée par une portion arrondie (221) et deux portions plates (222) situées de part et d'autre de la portion arrondie (221), les portions plates (222) étant en appui contre le fond du logement (9), la portion arrondie (221), dont le côté convexe est tourné vers l'élément d'extrémité de la colonne d'éléments, applique par déformation un effort axial sur les aimants permanents (14).

8. Rotor selon l'une des revendications 1 à 7, **caractérisé en ce que** les dispositifs de maintien sont en forme de bande de matière et **en ce que** la première partie (19) et la deuxième partie (20) des dispositifs de maintien sont élastiquement déformables.

9. Rotor selon l'une des revendications 1 à 8, **caractérisé en ce que** les dispositifs de maintien (17) comportent chacun une troisième partie (23) de forme plate et une zone de pliage (26) située entre la première (19) et la troisième (23) parties permettant à la troisième partie (23) d'être rabattue pour assurer la fermeture d'une extrémité du logement (9).

10. Rotor selon l'une des revendications 1 à 9, **caractérisé en ce qu'**il comporte en outre des flasques (31) de maintien plaqués de part et d'autre de faces radiales d'extrémités du corps (3) du rotor (1), ces flasques (31) de maintien comportant un ensemble de dents (42) assurant l'équilibrage du rotor (1).

11. Rotor selon la revendication 9 et 10, **caractérisé en ce que** les flasques (31) de maintien forment les fonds des logements (9), ces flasques (31) de maintien comportant des plaquettes (33) positionnés en regard des logements (9) pour être plaquées contre la deuxième (22) et la troisième (23) parties des dispositifs de maintien (17).

12. Rotor selon la revendication 10 ou 11, **caractérisé en ce que** les flasques de maintien (17) comportent des plots (36) destinés à coopérer avec des évidements (5) ménagés dans le corps (3) du rotor (1) pour assurer un centrage des flasques (31) par rapport au corps (3) du rotor.

13. Dispositif de maintien utilisé avec un rotor selon l'une des revendications 1 à 12 comportant un paquet de tôles formant le corps (3) du rotor ayant un axe (X), et des logements (9) situés dans le corps (3) du rotor recevant des aimants permanents (14), certains au moins des logements (9) contenant une pluralité d'aimants (14) empilés suivant une direction axiale et formant une colonne d'aimants, **caractérisé en ce que** le dispositif de maintien est une pièce élastique en forme de bande de matière et comporte une première partie (19) destinée à être positionnée axialement entre une extrémité interne (91) d'un logement (9) et une face des aimants (14) de la colonne d'aimants (14) tournée du côté de l'axe (X) du rotor, cette première partie (19) comportant une alternance de portions arrondies (191) et de portions plates (192) assurant la liaison entre les portions arrondies (191), les portions arrondies (191) dont le côté convexe est tourné vers les aimants permanents (14) appliquent par déformation un effort radial sur chaque aimant permanent (14) du logement (9) de l'intérieur vers l'extérieur du rotor (1), et une deuxième partie (22) élastiquement déformable pour exercer un effort axial sur les aimants permanents (14), la deuxième partie (22) étant formée par une portion arrondie (221) et deux portions plates (222) situées de part et d'autre de la portion arrondie (221), les portions plates (222) étant destinées à venir en appui contre le fond d'un logement (9), la portion arrondie (221) dont le côté convexe est tourné vers l'aimant étant destinée à appliquer par déformation un effort axial sur les aimants (14) du logement.

14. Dispositif de maintien selon la revendication 13, **caractérisé en ce qu'**il comporte une troisième partie (23) de forme plate et une zone de pliage (26) située entre la première (19) et la troisième (23) parties permettant à la troisième partie (23) d'être rabattue pour assurer la fermeture d'une extrémité d'un logement (9).

## Patentansprüche

1. Rotor (1) mit Dauermagneten (14), welcher aufweist:
- ein Blechpaket, das den Körper (3) des Rotors mit einer Achse (X) bildet, und
- Aufnahmen (9), die auf dem Umfang des Rotors (1) gleichmäßig beabstandet sind und sich im Körper (3) des Rotors (1) befinden, und von denen wenigstens einige ein Element in der Form eines Dauermagneten (14) aufnehmen,
- wenigstens einige der Aufnahmen (9) enthalten Elemente, die wenigstens mehrere Magnete (14) aufweisen, die in einer axialen Richtung gestapelt sind und eine Säule von Magneten bilden,
**dadurch gekennzeichnet, dass** der Rotor (1) außerdem Haltevorrichtungen (17) aufweist, welche elastische Teile in Form eines Materialstreifens sind und jeweils einen ersten Teil (19) aufweisen, der axial zwischen einem inneren Ende (91) einer Aufnahme (9) und einer Fläche der Magnete (14) der Säule von Magneten (14), die der Seite der Achse (X) des Rotors zugewandt ist, positioniert ist, wobei dieser erste Teil (19) eine solche Form aufweist, dass er durch Verformung eine radiale Kraft auf jeden Magneten (14) der Säule von Magneten vom Inneren zur Außenseite des Rotors (1) hin ausübt, und einen zweiten Teil (22), der elastisch verformbar ist, um eine axiale Kraft auf die Dauermagnete (14) auszuüben, wobei der zweite Teil (22) so positioniert ist, dass er radial an einem Boden der Aufnahme (9) und einer Endfläche der Säule von Elementen im Inneren der Aufnahme (9) anliegt, wobei dieser zweite Teil (22) eine solche Form aufweist, dass er durch Verformung eine axiale Kraft auf die Dauermagnete (14) ausübt.

2. Rotor nach Anspruch 1, **dadurch gekennzeichnet, dass** die Aufnahmen (9) geschlossen sind, indem sie in dem Körper (3) des Rotors (1) derart ausgebildet sind, dass das innere Ende (91) der Aufnahmen (9) geschlossen ist.

3. Rotor nach Anspruch 1, **dadurch gekennzeichnet, dass** wenigstens einige der Aufnahmen (9) nach innen in Richtung der Achse (X) des Rotors einseitig geschlossen sind, indem sie in dem Körper (3) des Rotors (1) ausgebildet sind, und dadurch, dass das innere Ende (91) dieser Aufnahmen durch eine zentrale Nabe (2), welche der Rotor (2) aufweist, geschlossen ist.

4. Rotor nach einem der Ansprüche 1 bis 3, **dadurch gekennzeichnet, dass** wenigstens einige der Aufnahmen (9) ausschließlich mehrere Dauermagnete (14) enthalten, die in einer axialen Richtung übereinandergestapelt sind, um eine Säule von Elementen zu bilden.

5. Rotor nach einem der Ansprüche 1 bis 3, **dadurch gekennzeichnet, dass** wenigstens einige der Aufnahmen (9) mehrere Dauermagnete (14) enthalten, die in einer axialen Richtung gestapelt sind, wobei wenigstens ein nichtmagnetisches Element mit derselben Form wie die Magnete vorhanden ist, um in einer axialen Richtung mehrere übereinandergestapelte Elemente zu bilden.

6. Rotor nach Anspruch 4 oder 5, **dadurch gekennzeichnet, dass** jeder erste Teil (19) eine wechselnde Folge von gekrümmten Abschnitten (191) und flachen Abschnitten (192), welche die Verbindung zwischen den gekrümmten Abschnitt (191) sicherstellen, aufweist, wobei die Anzahl gekrümmter Abschnitte (191) gleich der Anzahl von Elementen der Säule von Elementen im Inneren einer Aufnahme (9) ist, wobei die gekrümmten Abschnitte (191), deren konvexe Seite den Elementen der Säule zugewandt ist, durch Verformung eine radiale Kraft auf jedes Element der Säule von Elementen der Aufnahme (9) vom Inneren zur Außenseite des Rotors (1) hin ausüben.

7. Rotor nach einem der Ansprüche 1 bis 6, **dadurch gekennzeichnet, dass** der zweite Teil (22) von einem gekrümmten Abschnitt (221) und zwei flachen Abschnitten (222), die sich beiderseits des gekrümmten Abschnitts (221) befinden, gebildet wird, wobei die flachen Abschnitte (222) am Boden der Aufnahme (9) anliegen, wobei der gekrümmte Abschnitt (221), dessen konvexe Seite dem Endelement der Säule von Elementen zugewandt ist, durch Verformung eine axiale Kraft auf die Dauermagnete (14) ausübt.

8. Rotor nach einem der Ansprüche 1 bis 7, **dadurch gekennzeichnet, dass** die Haltevorrichtungen die Form eines Materialstreifens aufweisen, und dadurch, dass der erste Teil (19) und der zweite Teil (20) der Haltevorrichtungen elastisch verformbar sind.

9. Rotor nach einem der Ansprüche 1 bis 8, **dadurch gekennzeichnet, dass** die Haltevorrichtungen (17) jeweils einen dritten Teil (23) von flacher Form und einen zwischen dem ersten (19) und dem dritten (23) Teil befindlichen Biegebereich (26), der es ermöglicht, dass der dritte Teil (23) umgeklappt wird, um das Verschließen eines Endes der Aufnahme (9) sicherzustellen, aufweisen.

10. Rotor nach einem der Ansprüche 1 bis 9, **dadurch gekennzeichnet, dass** er außerdem Halteflansche (31) aufweist, die beiderseits radialer Endflächen des Körpers (3) des Rotors (1) angepresst sind, wobei diese Halteflansche (31) eine Anordnung von Zähnen (42) aufweisen, welche das Auswuchten des Rotors (1) sicherstellt.

11. Rotor nach Anspruch 9 und 10, **dadurch gekennzeichnet, dass** die Halteflansche (31) die Böden der Aufnahmen (9) bilden, wobei diese Halteflansche (31) Platten (33) aufweisen, die gegenüber den Aufnahmen (9) positioniert sind, um gegen den zweiten (22) und den dritten (23) Teil der Haltevorrichtungen (17) gepresst zu werden.

12. Rotor nach Anspruch 10 und 11, **dadurch gekennzeichnet, dass** die Halteflansche (17) Blöcke (36) aufweisen, die dazu bestimmt sind, mit Aussparungen (5) zusammenzuwirken, die im Körper (3) des Rotors (1) ausgebildet sind, um eine Zentrierung der Flansche (31) bezüglich des Körpers (3) des Rotors sicherzustellen.

13. Haltevorrichtung, welche mit einem Rotor nach einem der Ansprüche 1 bis 12 verwendet wird, der ein Blechpaket, das den Körper (3) des Rotors mit einer Achse (X) bildet, und Aufnahmen (9), die sich im Körper (3) des Rotors befinden und Dauermagnete (14) aufnehmen, aufweist, wobei wenigstens einige der Aufnahmen (9) mehrere Magnete (14) enthalten, die in einer axialen Richtung gestapelt sind und eine Säule von Magneten bilden, **dadurch gekennzeichnet, dass** die Haltevorrichtung ein elastisches Teil in Form eines Materialstreifens ist und einen ersten Teil (19) aufweist, der dazu bestimmt ist, axial zwischen einem inneren Ende (91) einer Aufnahme (9) und einer Fläche der Magnete (14) der Säule von Magneten (14), die der Seite der Achse (X) des Rotors zugewandt ist, positioniert zu werden, wobei dieser erste Teil (19) eine wechselnde Folge von gekrümmten Abschnitten (191) und flachen Abschnitten (192), welche die Verbindung zwischen den gekrümmten Abschnitt (191) sicherstellen, aufweist, wobei die gekrümmten Abschnitte (191), deren konvexe Seite den Dauermagneten (14) zugewandt ist, durch Verformung eine radiale Kraft auf jeden Dauermagneten (14) der Aufnahme (9) vom Inneren zur Außenseite des Rotors (1) hin ausüben, und einen zweiten Teil (22), der elastisch verformbar ist, um eine axiale Kraft auf die Dauermagnete (14) auszuüben, wobei der zweite Teil (22) von einem gekrümmten Abschnitt (221) und zwei flachen Abschnitten (222), die sich beiderseits des gekrümmten Abschnitts (221) befinden, gebildet wird, wobei die flachen Abschnitte (222) dazu bestimmt sind, am Boden einer Aufnahme (9) zur Anlage zu kommen, wobei der gekrümmte Abschnitt (221), dessen konvexe Seite dem Magneten zugewandt ist, dazu bestimmt ist, durch Verformung eine axiale Kraft auf die Magnete (14) der Aufnahme auszuüben.

14. Haltevorrichtung nach Anspruch 13, **dadurch gekennzeichnet, dass** sie einen dritten Teil (23) von flacher Form und einen zwischen dem ersten (19) und dem dritten (23) Teil befindlichen Biegebereich (26), der es ermöglicht, dass der dritte Teil (23) umgeklappt wird, um das Verschließen eines Endes der Aufnahme (9) sicherzustellen, aufweist.

## Claims

1. Permanent-magnet (14) rotor (1) including:
- a sheet stack forming the body (3) of the rotor having an axis (X), and
- recesses (9) spaced regularly over the circumference of the rotor (1) and situated in the body (3) of the rotor (1), at least some of which recesses receive at least one element in the form of a permanent magnet (14),
- at least some of the recesses (9) contain elements including at least a plurality of magnets (14) stacked in an axial direction and forming a column of magnets,
**characterized in that** the rotor (1) furthermore includes holding devices (17) being elastic components in the form of a strip of material and each including a first part (19) positioned axially between an inner end (91) of a recess (9) and a face of the magnets (14) of the column of magnets (14) that faces the side of the axis (X) of the rotor, this first part (19) having a form such that it exerts, through deformation, a radial force on each magnet (14) of the column of magnets from the inside to the outside of the rotor (1), and a second elastically deformable part (22) for exerting an axial force on the permanent magnets (14), the second part (22) being positioned radially against a bottom of the recess (9) and an end face of the column of elements inside the recess (9), this second part (22) having a form such that it exerts, through deformation, an axial force on the permanent magnets (14).

2. Rotor according to Claim 1, **characterized in that** the recesses (9) are closed by being formed in the body (3) of the rotor (1) such that the inner end (91) of the recesses (9) is closed.

3. Rotor according to Claim 1, **characterized in that** at least some of the recesses (9) are blind towards the inside in the direction of the axis (X) of the rotor by being formed in the body (3) of the rotor (1), and **in that** the inner end (91) of these recesses is closed by a central hub (2) contained within the rotor (2).

4. Rotor according to one of Claims 1 to 3, **characterized in that** at least some of the recesses (9) contain only a plurality of permanent magnets (14) stacked on top of one another in an axial direction so as to form a column of elements.

5. Rotor according to one of Claims 1 to 3, **characterized in that** at least some of the recesses (9) contain a plurality of permanent magnets (14) stacked in an axial direction with the presence of at least one nonmagnetic element of the same form as the magnets so as to form a plurality of elements stacked on top of one another in an axial direction.

6. Rotor according to Claim 4 or 5, **characterized in that** each first part (19) includes an alternation of rounded portions (191) and of flat portions (192) providing the link between the rounded portions (191), the number of rounded portions (191) being equal to the number of elements of the column of elements inside a recess (9), the rounded portions (191) whose convex side faces towards the elements of the column apply, through deformation, a radial force to each element of the column of elements of the recess (9) from the inside towards the outside of the rotor (1).

7. Rotor according to one of Claims 1 to 6, **characterized in that** the second part (22) is formed by a rounded portion (221) and two flat portions (222) situated on either side of the rounded portion (221), the flat portions (222) bearing against the bottom of the recess (9), the rounded portion (221) whose convex side faces towards the end element of the column of elements applies, through deformation, an axial force to the permanent magnets (14).

8. Rotor according to one of Claims 1 to 7, **characterized in that** the holding devices are in the form of a strip of material, and **in that** the first part (19) and the second part (20) of the holding devices are elastically deformable.

9. Rotor according to one of Claims 1 to 8, **characterized in that** the holding devices (17) each include a third part (23) of flat form and a folding area (26) situated between the first (19) and third (23) parts, allowing the third part (23) to be folded in order to close one end of the recess (9).

10. Rotor according to one of Claims 1 to 9, **characterized in that** it furthermore includes holding flanges (31) pressed on either side of the radial end faces of the body (3) of the rotor (1), these holding flanges (31) including a set of teeth (42) that balance the rotor (1).

11. Rotor according to Claim 9 and 10, **characterized in that** the holding flanges (31) form the bottoms of the recesses (9), these holding flanges (31) including plates (33) positioned facing the recesses (9) so as to be pressed against the second (22) and the third (23) parts of the holding devices (17).

12. Rotor according to Claim 10 or 11, **characterized in that** the holding flanges (17) include pads (36) intended to interact with indentations (5) provided in the body (3) of the rotor (1) in order to centre the flanges (31) with respect to the body (3) of the rotor.

13. Holding device used with a rotor according to one of Claims 1 to 12 including a sheet stack forming the body (3) of the rotor having an axis (X), and recesses (9) situated in the body (3) of the rotor receiving permanent magnets (14), at least some of the recesses (9) containing a plurality of magnets (14) stacked in an axial direction and forming a column of magnets, **characterized in that** the holding device is an elastic component in the form of a strip of material and includes a first part (19) intended to be positioned axially between an inner end (91) of a recess (9) and a face of the magnets (14) of the column of magnets (14) that faces the side of the axis (X) of the rotor, this first part (19) including an alternation of rounded portions (191) and of flat portions (192) providing the link between the rounded portions (191), the rounded portions (191) whose convex side faces towards the permanent magnets (14) apply, through deformation, a radial force to each permanent magnet (14) of the recess (9) from the inside towards the outside of the rotor (1), and a second elastically deformable part (22) for exerting an axial force on the permanent magnets (14), the second part (22) being formed by a rounded portion (221) and two flat portions (222) situated on either side of the rounded portion (221), the flat portions (222) being intended to bear against the bottom of a recess (9), the rounded portion (221) whose convex side faces towards the magnet being intended to apply, through deformation, an axial force to the magnets (14) of the recess.

14. Holding device according to Claim 13, **characterized in that** it includes a third part (23) of flat form and a folding area (26) situated between the first (19) and the third (23) parts, allowing the third part (23) to be folded so as to close an end of a recess (9).
